# EUROPEAN PATENT APPLICATION

(11) **EP 2 443 960 A1**
(43) Date of publication of application: **25.04.2012**
(21) Application number: 10290577.5
(22) Date of filing: 20.10.2010
(51) Int. Cl.: A45D 44/00

(54) **Hair density measurement and scalp treatment apparatus**

(71) Applicant: Perrin, Laurent, 74380 Cranves-Sales (FR); Francoy, Gérard, 1196 Gland (CH)
(72) Inventor: Perrin, Laurent, 74380 Cranves-Sales (FR); Francoy, Gérard, 1196 Gland (CH)
(74) Representative: Quintelier, Claude

(57) **Abstract**

Described herein is apparatus for the measurement and treatment of the hair and scalp of an individual. The apparatus comprises a measurement helmet that is used to measure the condition of the hair and scalp and an energy transmitter for improving the condition of the hair and scalp using ultrasound and phototherapy.

## Description

The present invention relates to hair density measurement and scalp treatment apparatus and is more particularly concerned with measuring properties of a person's hair and treating the scalp and hair to improve its quality and condition.

It is normal to lose a certain number of hairs each day and have new hairs regrow from the same hair follicles. However, when the number of hairs lost each day exceeds more than 100, not all hairs can be regrown. If the loss rate is maintained, the hair thins and eventually results in baldness.

Between the ages of 20 and 55, millions of people living mainly in Europe and America lose their hair. This presents a challenge of style, a question of appearance or a question of self-confidence. After 30 years old, almost half of the male population is affected. This may be due one or more factors, such as, hormone levels, genetics and the environment. It is interesting to note that men, originating in countries where there is a weak profile for male pattern baldness, such as, Japan, China, India or Africa, can also develop the condition when they settle in the West.

Alopecia, also known baldness, is the loss of hair from the head or body. It tends to be involuntary and unwelcome and is sometimes known as androgenic alopecia. However, alopecia may also be caused by a psychological compulsion to pull out one's own hair, trichotillomania or the unforeseen consequences of voluntary hairstyling routines, for example, traction alopecia that is caused by excessively tight ponytails or braids. Hair relaxers or hot hair irons may also burn the scalp resulting in alopecia. In some cases, alopecia may be an indication of an underlying medical condition, such as, iron deficiency.

When hair loss occurs in only one section, it is known as alopecia areata. This is the most common form and is consistent with a sudden loss of hair causing patches to appear on either the scalp or other body areas. Complete baldness can result in the affected section and this is called alopecia totalis. Alopecia universalis affects the entire body and can be one of the side effects of chemotherapy.

There are two main reasons attributed to baldness. The first is androgenic alopecia as described above. This represents around 90% of baldness (including baldness in women). Testosterone is an indirect cause of this baldness but it must be converted into dihydrotestosterone (DHT) by an enzyme, 5-alpha reductase, to become active and to cause hair loss. DHT starts the balding process by increasingly shortening the growth of hair that is renewed. After about 25 cycles, the hair follicle dries up and the hair becomes increasingly thinner until it forms a fine clear down without providing any substantial cover for the scalp. Then, the follicle dies and disappears. This type of hair loss may be considered to be genetic and it can be seen in a person's parents and grandparents.

It was thought for a long time that alopecia, or male pattern baldness, was due to the over-production of testosterone. This view has changed and it is now thought that an unidentified hormone causes abnormal functioning at skin level of the scalp. Starting at the temples and progressing to frontal areas and crown of the head, androgenic alopecia extends progressively over the whole head. Sometimes only a ring of hair above the ears remains and is never lost.

Androgenic alopecia in women is less common and never ends in total baldness. Women can exhibit androgenic alopecia at any age but usually around or after menopause. In women, hair loss starts by an enlargement of the furrow at the crown where the hair becomes finer and less numerous.

A second cause of alopecia is seborrhoeic dermatitis, known as seborrhoea or seborrheic eczema. Seborrhoeic dermatitis is an inflammatory skin disorder that affects the scalp, face and other parts of the body. It causes scaly, flaky, itchy and red skin and particularly affects areas of the skin that have higher concentrations of sebum glands. DHT stimulates the sebaceous glands increasing the production of sebum. This blocks the hair follicles and progressively obstructs and asphyxiates the bulb of the hair follicle until it can no longer generate new hair growth.

Other causes of alopecia include poor hair washing, stress, and certain environmental conditions. Each of these may also have a real impact on the activation and increase in alopecia and hair loss.

Current methods for treatment of hair loss include oil-based lotions, pills, and hair transplants. In the case of oil-based lotions, these lotions are oily and need to be used continuously to provide any improvement in hair loss. Moreover, any improvement obtained by their use is quickly reversed when the lotions are no longer used. Furthermore, their use does not provide a natural look due to the amount of oil present on the surface of the hair and scalp.

Merck Sharp & Dohme Corporation, a subsidiary of Merck & Co., Inc, manufacture a hair loss drug in pill form for male pattern baldness under the registered trademark of "PROPECIA". The drug was developed to moderate male pattern hair loss on the vertex (top of the head) and anterior mid-scalp area (middle front of the head). The drug works by reducing DHT, a key cause of hair loss, by inhibiting the formation of DHT in the scalp. This in turn inhibits the further shrinking of affected hair follicles.

Hair implants also provide a solution to hair loss. However, the process is both expensive and painful as hair follicles need to be removed from a part of the head where they are plentiful and implanted in the areas from which hair has been lost.

It is therefore an object of the present invention to provide a system of scalp care that aims to reduce hair loss.

It is another object of the present invention to provide a tool for analysing the scalp and, in particular, hair density at predetermined locations on a person's head.

It is a further object of the present invention to provide a device for simultaneously supplying light and ultrasound energy to the scalp to improve its condition.

In accordance with a first aspect of the present invention, there is provided an apparatus for measuring the condition of the hair and scalp of an individual, the apparatus comprising:-
a measurement device having at least one camera mounted in the measurement device for obtaining images of at least one predetermined location of the head of the individual;
a processor for processing images obtained from the at least one camera and for determining on the basis of the processed images a density value for the hair; and
a display for displaying information relating to the processed images.

The apparatus preferably further comprises a memory for storing information relating to the processed images. The memory may be separate from the processor or may form part of the processor.

In one embodiment of the present invention, the measurement device has a single camera mounted within it and the apparatus further comprises drive means for moving the single camera in between a plurality of locations within the measurement device.

In another embodiment of the present invention, a plurality of cameras is mounted at respective plurality of locations within the measurement device. The plurality of cameras may form an array.

The plurality of locations is chosen to correspond to locations on a person's head that are indicative of hair loss.

In accordance with another aspect of the present invention, there is provided a method of measuring the condition of the hair and scalp of an individual using an apparatus comprising a measurement device having at least one camera mounted in the measurement device for obtaining images of at least one predetermined location of the head of the individual, a processor for processing images obtained from the at least one camera, and a display for displaying information relating to the processed images, the method comprising the steps of:-
a) applying the measurement device on or around the head of the individual;
b) obtaining images of the at least one predetermined location of the head of the individual from the at least one camera;
c) processing images obtained from the at least one camera and determining on the basis of the processed images at least a density value for the hair; and
d) displaying information relating to the processed images.

The method may further comprise the step of storing the processed images.

Step b) may comprise moving the camera to a plurality of locations within the measurement device and obtaining an image at each of the plurality of locations.

In accordance with a further aspect of the present invention, there is provided a hair and scalp energy transmitter comprising an ultrasonic unit and a phototherapy unit.

It is preferred that the hair and scalp energy transmitter is used in conjunction with products, in particular cosmetic products, for improving the condition of the hair and scalp.

The hair and scalp energy transmitter may comprises an array of light-emitting diodes and at least one ultrasonic probe.

In accordance with yet another aspect of the present invention, there is provided a kit for use in improving hair density and the condition of the scalp of an individual, the kit comprising apparatus as described above for measuring the condition of the hair and scalp of the individual, products for improving the condition of the hair and scalp, and a hair and scalp energy transmitter as described above for enhancing the effect of the products.

For a better understanding of the present invention, reference will now be made, by way of example only, to the accompanying drawings in which:-
Figure 1 illustrates areas characteristic of male pattern baldness;
Figure 2 illustrates a block diagram of a system for measuring hair properties in accordance with the present invention; and
Figure 3 illustrates a block diagram of a hair and scalp energy transmitter in accordance with the present invention.

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

The present invention takes care of the scalp by putting in place preventative measures for maintaining the health of the hair and scalp and to significantly reduce hair loss.

In accordance with the present invention, a system for repentantly measuring and analysing the condition of the hair of an individual and for determining hair density at predetermined locations is used in order to reliably monitor the health of the hair and scalp. Also according to the invention a line of products is used for improving the quality of the hair. And moreover a hair and scalp energy transmitter for simultaneously using phototherapy to increase blood flow to the scalp and ultrasound to enable a faster and more thorough penetration of the products in the scalp and to boost scalp metabolism, which increases the lymph flow.

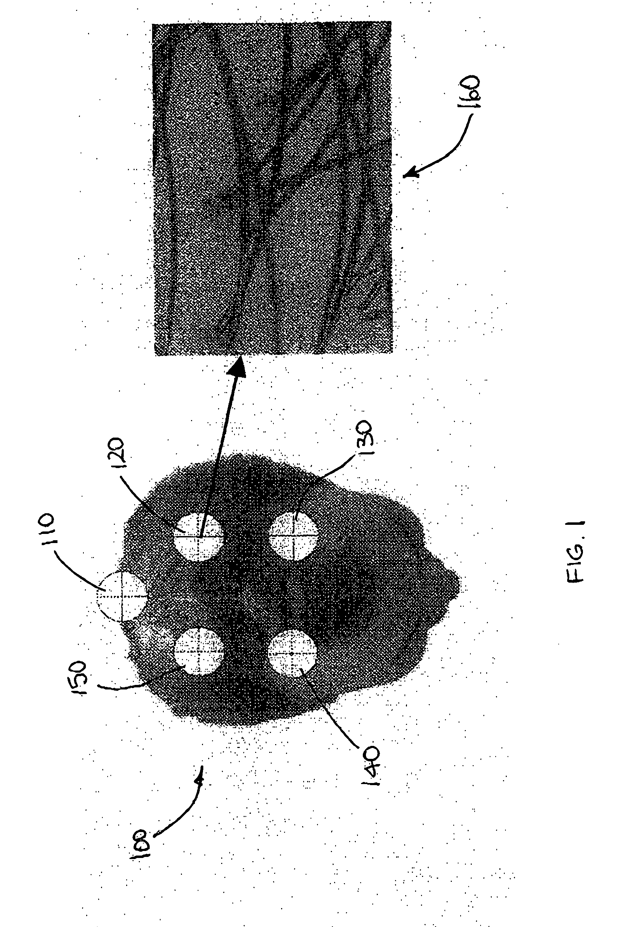

The first element relates to a system for analysing the condition of the hair and the determination of hair density at a plurality of predetermined locations that are characteristic of baldness. Figure 1 shown an example where five of such predetermined locations are illustrated. In Figure 1, the top of the head of a user 100 is shown together with the five predetermined locations 110, 120, 130, 140, 150 that are characteristic of baldness. At each of these locations 110, 120, 130, 140, 150, an image 160 is taken of the hair and the scalp. The image 160 is then analysed as will be described in more detail below.

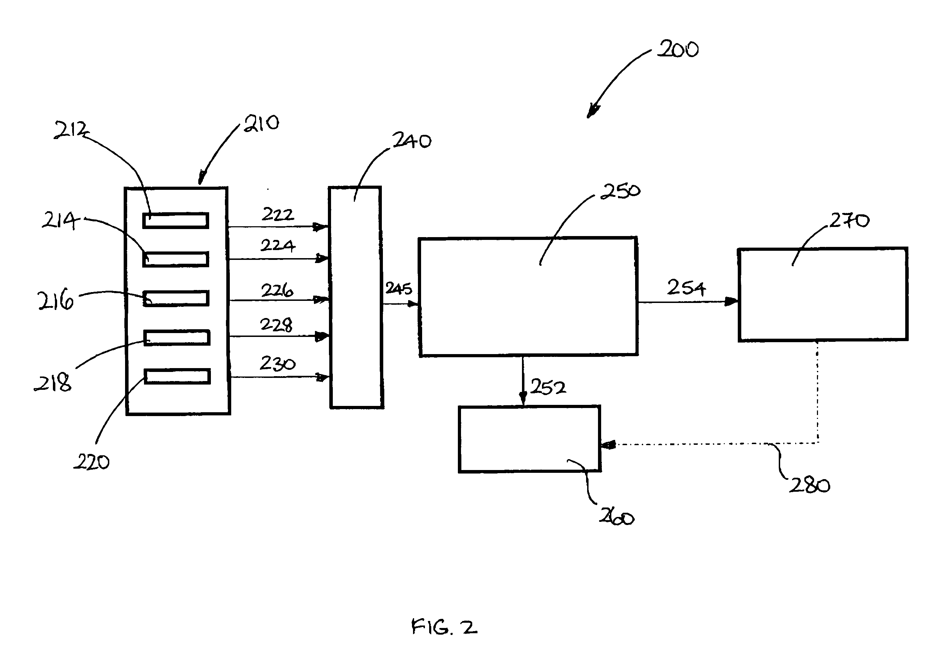

Figure 2 illustrates a block diagram of a system 200 for carrying out the analysis of a person's head at each of the five predetermined locations. The system 200 comprises a helmet 210 having a high-definition camera (not shown) mounted in it for taking images at each of the five predetermined locations 110, 120, 130, 140, 150 (Figure 1). The helmet 210 may take any suitable form, for example, a helmet for use when riding a bicycle. Naturally, it will be appreciated that the term "helmet" is used to include any device in which a camera can be mounted for taking the images and which can be mounted on a person's head or applied around the person's head.

Whilst a single camera may be used that moves from location to location to take images, it will be appreciated that a plurality of cameras can be used. So in the illustrated embodiment five camera elements 212, 214, 216, 218, 220 can also be used simultaneously or not instead of having to move one camera to each of the five locations. Alternatively, the five locations may correspond to imaging elements that form part of an imaging array (not shown). For ease of explanation, the present invention will be described as having five camera elements 212, 214, 216, 218, 220 located in the helmet 210, but it will be understood that the positions of the five camera elements can be the positions at which one camera can each time be placed as described above.

It will be appreciated that although the present invention is described as taking images at five locations using one or more cameras, it will be appreciated that any number of suitable locations can be used, for example, more or less than five locations, together with a suitable camera arrangement.

Output signals 222, 224, 226, 228, 230 from each camera 212, 214, 216, 218, 220 are fed to a multiplexer 240. The multiplexer 240 operates to pass the signals 222, 224, 226, 228, 230 to an image processor 250, in turn, as indicated by signal line 245. Alternatively, not shown, the signals 222, 224, 226, 228, 230 can be passed directly to the image processor 250 from the respective camera elements 212, 214, 216, 218, 220.

The image processor 250 processes the signals 222, 224, 226, 228, 230 to determine, for each image, a hair density value. This is for example realised by using the grey value of the pixels composing each image. An output signal 252 from the processor 250 passes information relating to the hair density value, as well as, scalp and hair condition to a memory 260 connected to the processor 250. Alternatively, the memory 260 may form part of the processor 250 (not shown). The memory could also be formed by a USB stick or a memory card which is owned by the user and carries the personal data of the user. In the latter case the user would not be bound to one particular place to have the method according to the invention applied.

Another output signal 254 from the processor 250 also having information relating to the scalp and hair condition is passed to a display 270 so that an operator of the system 200 can analyse the results and prescribe on the basis thereof products that are necessary for treatment of that particular individual. Images of the scalp and hair displayed are used by the operator to determine the condition of the individual's scalp and hair.

The operator of the system 200 may record the prescribed products together with any other relevant information with the images of the individual's head for example by means of a keypad (not shown) on the display 270 that allows the information to be stored with the images in the memory 260. This interaction between the display 270 and memory 260 is shown by dotted line 280. Alternatively, the display 270 may interact (not shown) with memory 260 via the processor 250.

In use, the helmet 210 is placed on the head of a person (not shown) whose hair and scalp are to be analysed. The helmet 210 is preferably very light (for example less than 2 kg) and is positioned so that it rests on the ears of the person. It is adjusted to circumference of the head so that a substantially repeatable position can be obtained for that person's head. The latter is relevant as it is necessary to take at analysis subsequent in time images of the same predetermined positions. This adjustment can be realised by suitable means such a level. If a single camera is used, then the camera is moved between each of the predetermined locations 112, 114, 116, 118, 220 (Figure 1) on the person's head to take an image in each location. Alternatively, if five camera elements are used, then each camera element takes an image at its associated location.

The images from the camera or cameras are processed in the image processor 250 to determine on the basis of the processed images hair density by automatically counting the number of hairs. This is for example achieved by determining on the basis of their grey value how many pixels in each image contain part of a hair and the determined value is for example given as a number per centimetre squared. The results are stored in the memory 260 and passed to a display 270 for review.

Whilst it is to be noted that the physical shape of each head is different, the helmet in accordance with the present invention is designed to rest on the ears of the client to allow the repeatability of the positioning and to be adjusted to the perimeter of the head so that measurements on the same head can consistently be taken. If the helmet is placed around the head, alignment is for example achieved by using a fixed reference point on the head, such as for example the nose.

The second element of the system in accordance with the present invention is a line of products that are used on the hair and scalp to improve their condition and hair density (hair loss). The products include shampoos for removing impurities that strangle the hair roots, and conditioners for improving the condition of the hair and the scalp. The products are preferably water based and comprise ingredients having A,B, E and H family vitamins and zinc..

Hair is made form keratin. Sulphur-containing amino-acids, zinc and vitamin B6 form the building blocks for keratin. Keratin is principally composed of proteins such as, methionine, cysteine, cystine and sulphur-containing amino-acids. The sulphur-containing amino-acids improve the strength of hair regrowth and assist in the growth of replacement hair from the hair follicles, control the secretion of sebum, and help to eliminate toxins the deposit at the hair roots and prevent their development.

Zinc is fundamental to the growth and vitality of hair and nails. For the renewal of hair, zinc is required for the synthesis of keratin proteins that bind the sulphur bonds to one another, and for protection against attack by free radicals. Zinc is also required for the synthesis of essential fatty acids which nourish the hair and prevent drying out of tissues around the hair follicles. It is also necessary for the mobilisation of vitamin A to lubricate the hair, hydrate the scalp and to prevent desquamation, the shedding of the outermost membrane or layer of a tissue, such as, skin. Lastly, zinc inhibits the 5-alpha reductase, an enzyme that generates excess sebum that may result in subsequent hair loss as mentioned above.

Vitamin B6 metabolises the sulphur-containing proteins of keratin, maximises the potential of zinc in its inhibitive action in respect of 5-alpha-reductase, and is necessary for the synthesis of taurine, a naturally occurring sulphonic acid that is derived from methionine and cysteine. Taurine calms nervous tensions and helps to fix magnesium to contribute to the equilibrium of neurotransmitters and the control of anxiety states.

Other vitamins, fatty acids and elements that can be included are:
Vitamin B2 for the reinforcement of the protein structure of hair;
Vitamin B3 as a vasodilator that increases the flow of blood to hair roots;
Vitamin B5 for the development of hair follicles;
Vitamin B8 for the stimulation of the scalp and has antiseborrheic properties;
Vitamin B9 for the improvement of fatigue;
Vitamin B12 for the manufacture of red blood cells;
Vitamin E, an anti-oxidant, for stimulating oxygenation and the circulation of blood at the hair follicles as well as for the protection of the skin and scalp from drying out;
Vitamin A, a protective agent for the epidermis, for hydration and having anti-bacterial properties;
Vitamin H, also known as biotin, for cell growth, the production of fatty acids and the metabolism of fats and amino acids;

Essential fatty acids for the nourishment of cell membranes and the fabrication of new cells and intercellular exchange in the area of hair growth; and

Magnesium for the absorption of the B vitamins, particularly, vitamin B6.

The third element of the system in accordance with the present invention is a hair and scalp energy transmitter which is used to apply the products described above. The transmitter may be the size of a hands-free telephone handset and provides two non-aggressive techniques for reaching the areas that need treatment.

The first technique is an ultrasonic technique (sonophoresis) enables a faster and more thorough penetration of specific active ingredients in the scalp to act on the enzyme responsible for hair loss and provide natural elements necessary for the health of the scalp. The second technique is phototherapy in which light energy is supplied to increase the circulation of blood in the scalp and stimulate its metabolism through the movement of the transmitter over the surface of the head to reinforcing existing hair and to regulate the development stage of hair during regrowth.

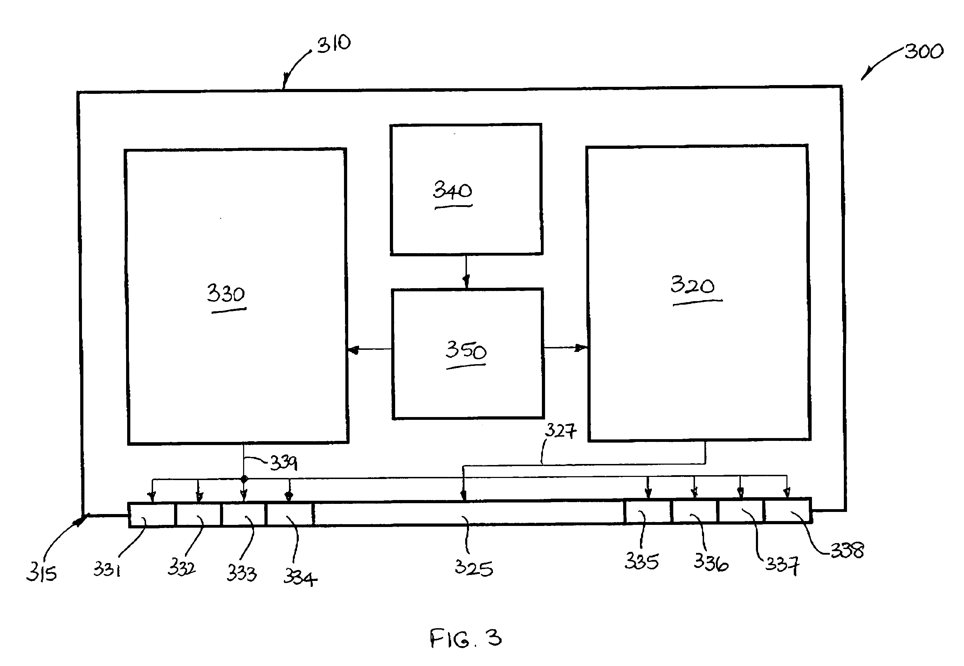

In Figure 3, a block diagram of an energy transmitter 300 is shown. The transmitter 300 comprises a waterproof housing 310 in which is mounted an ultrasonic unit 320 and a laser diode unit 330. The housing 310 also preferably contains a power supply 340 in the form of a battery, preferably a rechargeable battery, and a controller 350 connected to the power supply 340 and to each of the ultrasonic unit 320 and the laser diode unit 330. The power supply 340 may provide power to the ultrasonic unit 320 and the laser diode unit 330 directly (not shown) or via the controller 350 as shown.

If the battery is rechargeable, it may be recharged in the transmitter itself, in which case a suitable charging point is provided in the housing 310, or it may be removed for charging. It may be the case that the transmitter 300 is mains operated and has a lead for connecting to an electricity supply.

As shown in Figure 3, the ultrasonic unit 320 is connected to an ultrasonic probe 325 mounted in an external wall or face 315 of the housing 310 by means of a connection 327. Although the probe 325 is shown as being mounted centrally within the wall or face 315, it will be appreciated that it can be located in any other suitable position to maximise the effects of the ultrasonic energy on the hair and scalp of the person using the transmitter 300. It will also be appreciated that although a single probe 325 is shown, any suitable number of such probes may be utilised to maximise the effects of the ultrasonic energy.

The ultrasonic unit 320 has a power rating of 1.5Wcm⁻² and operates at a frequency of 2.8kHz ± 5% either continuously or pulsed. The laser diode unit 330 has a power rating of 5mW ± 5% and operates on a wavelength of 650nm. Whilst this wavelength is in the visible spectrum range, there is still a risk of damage to the eyes, in particular, photochemical damage to the retina and retina burn. The operator of the transmitter 300 and the person on whom the transmitter is used both need to wear suitable safety eyewear. In addition, suitable health and safety precautions need to be taken.

The energy delivered by the ultrasonic unit 320 in combination with the used products favours the absorption of the active ingredients, which are "pushed in an even way into the upper layers of the scalp, thereby enabling to act against the enzyme responsible for hair loss. Another effect is that of micro-massage created by the alternating compressions and decompressions of the tissues to "drain" the lymphatic system. This removes of toxins from the cellular tissue in the scalp as well as relaxes it.

The laser diode unit 330 comprises a plurality of diode elements (not shown) that transmit light to a plurality of transmission elements 331, 332, 333, 334, 335, 336, 337, 338 as shown formed in an external wall or face 315 of the housing 310. Each transmission element 331, 332, 333, 334, 335, 336, 337, 338 is connected to the laser diode unit 330 by means of a connection 339 as shown.

Although shown as being grouped as two sets of four elements on either side of the ultrasonic probe 325, it will be appreciated that the transmission elements may be grouped in any suitable arrangement to maximise the amount of light applied to the scalp as the transmitter 300 is used. Moreover, it will be appreciated that any suitable number of transmission elements may be used and the number of elements is not limited to eight as illustrated in Figure 3.

The light energy delivered by the emission of photons from the laser diode unit 330 that are transmitted through transmission elements 331, 332, 333, 334, 335, 336, 337, 338 has a re-energising vasodilator effect on weak blood circulation in the scalp to reinforce existing hair and to regulate the development stage of hair during regrowth through the supply of blood flow with fresh oxygen.

Although the energy transmitter is described as having substantially planar external walls or faces, it will be appreciated that the face that contacts the head may be suitably shaped, for example, curved, to provide a better contact between the transmitter and the head. Additionally, a suitable cushioning material may be provided on the face making contact with the head.

In accordance with the present invention, the helmet is used to take measurements before treatment with the products and the energy transmitter begins. These readings form a base point against which any future readings, for example, those taken after a predetermined number of treatment sessions, can be compared.

It is envisaged that the system of the present invention can be used in many ways:
1) A hair salon or other suitable salons, for example, beauty salons, purchases the system, namely, the helmet and its associated processing, the products and the energy transmitter. All treatments are carried out in the hair salon, the client purchasing an initial consultation and a predetermined number of treatment sessions using the products and the energy transmitter. For example, a series of ten treatment sessions may be purchased by a client to be taken over a predetermined period of time with specific limits as to the frequency of the treatments. The first treatment session includes the initial consultation. Each following treatment session takes place in the hair salon. However, the client may be given products to use at home as part of his treatment.
2) The hair salon leases the helmet and the transmitter and purchases the products for use on a client and all treatments are carried out in the hair salon.

The elements of the system may be sold together or in kit form. Alternatively, elements of the system could be leased as a kit. For example, the helmet and transmitter may be leased as a kit with an initial supply of products, and the products may be sold separately for replenishing the supply for use with the kit.

Data obtained from a consultation may be stored locally and/or in a central database. The central database may be accessed by each salon using the system in accordance with the present invention, or by the client himself. The data may be stored on a card that can be used at other salons so that the client is not limited to using the same salon each time.

## Claims

1. Apparatus for measuring the condition of the hair and scalp of an individual, the apparatus comprising:-
a measurement device having at least one camera mounted in the measurement device for obtaining images of at least one predetermined location of the head of the individual;
a processor for processing images obtained from the at least one camera and for determining on the basis of the processed image a density value for the hair; and
a display for displaying information relating to the processed images.

2. Apparatus according to claim 1, further comprising a memory for storing information relating to the processed images.

3. Apparatus according to claim 2, wherein the memory forms part of the processor.

4. Apparatus according to any one of the preceding claims, wherein a single camera is mounted in the measurement device and the apparatus further comprises drive means for moving the single camera between a plurality of locations within the measurement device.

5. Apparatus according to any one of claims 1 to 3, wherein a plurality of cameras is mounted at respective plurality of locations within the measurement device.

6. Apparatus according to claim 5, wherein the plurality of cameras forms a camera array.

7. Apparatus according to any one of claims 4 to 6, wherein the plurality of locations corresponds to locations indicative of hair loss.

8. A method of measuring the condition of the hair and scalp of an individual using apparatus comprising a measurement device having at least one camera mounted in the measurement device for obtaining images of at least one location of the head of the individual, a processor for processing images obtained from the at least one camera, and a display for displaying information relating to the processed images, the method comprising the steps of:-
a) placing the measurement device on the head of the individual;
b) obtaining images of the at least one location of the head of the individual from the at least one camera;
c) processing images obtained from the at least one camera to provide at least a hair density value; and
d) displaying information relating to the processed images.

9. A method according to claim 8, further comprising the step of storing the processed images.

10. A method according to claim 8 or 9, wherein step b) comprises moving the camera to a plurality of locations within the measurement device and obtaining an image at each of the plurality of locations.

11. A hair and scalp energy transmitter comprising an ultrasonic unit and a phototherapy unit.

12. A hair and scalp energy transmitter according to claim 11, further comprising an array of light-emitting diodes and at least one ultrasonic probe.

13. A hair and scalp energy transmitter according to claim 11 or 12, used in conjunction with products for improving the condition of the hair and scalp.

14. A kit for use in improving the hair density and the condition of the scalp of an individual, the kit comprising apparatus according to any one of claims 1 to 7 for measuring the condition of the hair and scalp of the individual, products for improving the condition of the hair and scalp, and a hair and scalp energy transmitter according to claim 11 or 12 for enhancing the effect of the products.
